# EUROPÄISCHE PATENTSCHRIFT

(11) **EP 4 230 445 B1**
(45) Veröffentlichungstag und Bekanntmachung des Hinweises auf die Patenterteilung: **05.11.2025**
(21) Anmeldenummer: 23155039.3
(22) Anmeldetag: 06.02.2023
(51) Int. Cl.: B60C 27/06

(54) **FELGENADAPTER ZUR BEFESTIGUNG EINER SELBSTZENTRIERENDEN GLEITSCHUTZKETTE AN EINER FAHRZEUGFELGE MIT EINEM AXIAL NACH AUSSEN GEWÖLBTEN FELGENTOPF**
RIM ADAPTER FOR FIXING A SELF-CENTERING SLIDE PROTECTION CHAIN TO A VEHICLE RIM HAVING AN AXIALLY OUTWARDLY CURVED RIM CUP
ADAPTATEUR DE JANTE POUR LA FIXATION D'UNE CHAÎNE ANTIDÉRAPANTE AUTOCENTRANTE SUR UNE JANTE DE VÉHICULE DOTÉE D'UN CACHE DE JANTE AXIALEMENT ARQUÉ

(30) Priorität: 17.02.2022 DE 202022100913 U
(43) Veröffentlichungstag der Anmeldung: 23.08.2023
(73) Patentinhaber: RUD Ketten Rieger & Dietz GmbH u. Co. KG, 73432 Aalen (DE)
(72) Erfinder: GRIMM, Anton, 73479 Ellwangen (DE)
(74) Vertreter: Grünecker Patent- und Rechtsanwälte PartG mbB

(56) Entgegenhaltungen:
- DE-A1- 4 225 802
- DE-C- 860 321
- KR-A- 20070 019 535
- US-A- 3 473 593
- US-A1- 2009 095 393

## Beschreibung

Die Erfindung betrifft einen Felgenadapter zur Befestigung einer selbstzentrierenden Gleitschutzkette an einer Fahrzeugfelge mit einem axial nach außen gewölbten Felgentopf, insbesondere an einer Fahrzeugfelge eines Nutzfahrzeugs.

Gleitschutzketten für Fahrzeuge sind bekannt. Sie können zur Traktionsverbesserung auf rutschigen Untergründen, beispielsweise auf Schnee oder Schlamm, dienen. Selbstzentrierende Gleitschutzketten können am Fahrzeugrad montiert werden, wobei sich ein Laufnetz der Gleitschutzkette während der Montage und/oder beim Anfahren des Fahrzeugs selbsttätig auf die Lauffläche des Fahrzeugrads zieht.

DE 42 25 802 A1 schlägt den Einsatz eines Felgenschutzes vor, der aus einer Scheibe besteht, die mit Anschlusselementen zu ihrer lösbaren oder unlösbaren Verbindung mit der äußeren Halterung der Gleitschutzkette versehen ist. DE 860 321 C betrifft einen Gleitschutz für die Räder von Kraftfahrzeugen, bestehend aus biegsamen Bändern mit Gleitschutznocken, welche quer zur Radebene um den Luftreifen zu legen sind, wobei die hakenförmigen Enden der biegsamen Bänder in zur Radmitte offene hakenförmige Rinnen der das Reifenbett bildenden beiden Ränder der Felge eingehakt sind. Aus der KR 2007 0019535 A ist eine Schneekette bekannt, die einen Innenring, der eine geschlossene Kurve auf einer Seite eines Rades bildet, die nach innen eines Fahrzeugs gerichtet ist, und einen Außenring, der eine geschlossene Kurve auf einer Seite eines Rades bildet, die nach außen des Fahrzeugs gerichtet ist, und eine Reihe von rutschfesten Kettenabschnitten umfasst, die auf der Lauffläche eines Reifens des Rades angeordnet sind und den Außenring und den Innenring verbinden.

Manche Fahrzeugfelgen weisen einen nach außen gewölbten Felgentopf auf. Solche Felgentöpfe sind insbesondere an den Fahrzeugfelgen von Lkw-Rädern zu finden. Die Montage eines Felgenadapters für eine selbstzentrierende Gleitschutzkette an einer solchen Fahrzeugfelge kann umständlich sein.

Es ist daher die Aufgabe der Erfindung, einen Felgenadapter für eine selbstzentrierende Gleitschutzkette bereitzustellen, der einfach an einer Fahrzeugfelge mit einem axial nach außen gewölbten Felgentopf angebracht werden kann.

Diese Aufgabe ist für den oben genannten Felgenadapter dadurch gelöst, dass der Felgenadapter einen wiederholt am Felgentopf anbringbar ausgestalteten Flanschabschnitt und einen am Flanschabschnitt angebrachten Befestigungsring aufweist, wobei der Befestigungsring in radialer Richtung eine Hinterschneidung zum Einhängen eines Hakens aufweist, die in einer Umfangsrichtung des Flanschabschnitts durchgängig verläuft.

Mit dem Felgenadapter ist es möglich, ein Fahrzeugrad, dessen Felge mit einem nach außen gewölbten Felgentopf versehen ist, auf einfache Weise mit einer selbstzentrierenden Gleitschutzkette auszurüsten. Dazu kann der Felgenadapter mit seinem Flanschabschnitt am nach außen gewölbten Felgentopf angebracht werden und dort verbleiben. Der am Flanschabschnitt angebrachte Befestigungsring weist eine Hinterschneidung in radialer Richtung auf. In diese Hinterschneidung kann wenigstens ein Haken eines Spannmittels der Gleitschutzkette eingehängt werden. Die Gleitschutzkette kann dadurch sicher an der Fahrzeugfelge gehalten sein.

Das Spannmittel einer selbstzentrierenden Gleitschutzkette ist in der Regel elastisch. Diese Elastizität kann dazu benutzt werden, die Gleitschutzkette zum Fahrzeuggrad hinzuziehen, sodass das Laufnetz auf der Lauffläche des Reifens zentriert wird.

Durch die in Umfangsrichtung durchgängig verlaufende Hinterschneidung kann sich der wenigstens eine Haken durchgängig entlang dem Befestigungsring bewegen. Dies ist vorteilhaft, da sich eine Relativbewegung zwischen Gleitschutzkette und Fahrzeugrad beim Abrollen des Reifens auf dem Laufnetz einstellt. Der Haken kann dann entlang dem Befestigungsring in Umfangsrichtung wandern. Dadurch können Beschädigungen an der Gleitschutzkette und/oder am Fahrzeugrad vermieden werden. Vorzugsweise ist eine Gleitschutzkette mit mehreren Spannmitteln, die jeweils über einen Haken zum Einhängen in die Hinterschneidung verfügen, versehen.

Die Hinterschneidung verläuft entlang der Umfangsrichtung des Flanschabschnitts durchgängig. Dabei verläuft die Hinterschneidung vorzugsweise vollständig durchgängig, also entlang eines Vollkreises. Mit anderen Worten kann durch die Hinterschneidung ein in sich geschlossener kreisförmiger Weg für den Haken gebildet sein.

In einem an der Fahrzeugfelge montierten Zustand des Felgenadapters verlaufen vorzugsweise sowohl eine Ringachse des Befestigungsrings als auch eine Flanschachse des Flanschabschnitts koaxial mit einer Radachse des Fahrzeugrads. Die Ringachse ist dabei eine sich durch das Zentrum des Befestigungsrings erstreckende und senkrecht zu einer durch den Befestigungsring aufgespannten Ebene verlaufende Achse.

Die Erfindung betrifft auch ein Gleitschutzkettenset für eine Fahrzeugfelge, welche einen Felgenadapter der oben beschriebenen Art und eine Gleitschutzkette umfasst, wobei die Gleitschutzkette wenigstens ein Spannmittel aufweist, das an einem Ende mit der übrigen Gleitschutzkette verbunden und an einem anderen Ende mit wenigstens einem zum Anhängen an den Befestigungsring ausgestalteten Haken versehen ist. Vorzugsweise ist die Gleitschutzkette mit einer Mehrzahl von Spannmitteln versehen, von denen jedes einen Haken aufweist.

Die erfindungsgemäße Lösung kann durch verschiedene, jeweils für sich vorteilhafte und beliebig miteinander kombinierbare Ausgestaltungen weiter verbessert werden. Auf diese Ausgestaltungen und die mit ihnen verbundenen Vorteile ist im Folgenden eingegangen.

Gemäß einer ersten vorteilhaften Ausgestaltung des Felgenadapters kann der Flanschabschnitt im Wesentlichen scheibenförmig sein. Insbesondere kann der Flanschabschnitt als Ringscheibe gebildet sein. Der Flanschabschnitt ist vorzugsweise aus Stahl gefertigt. Alternativ dazu kann er auch aus einem anderen Material, bevorzugt aus einem metallischen Werkstoff, gefertigt sein.

Der Befestigungsring kann einen kreisrunden Querschnitt aufweisen. Durch den kreisrunden Querschnitt kann eine einfach gebildete Hinterschneidung erhalten werden.

Der Befestigungsring ist bevorzugt materialschlüssig mit dem Flanschabschnitt verbunden. Der Befestigungsring ist vorzugsweise aus dem gleichen Material wie der Flanschabschnitt, insbesondere Stahl, gefertigt. Der Befestigungsring kann integraler Bestandteil des Flanschabschnitts sein.

Zur Erzeugung des Befestigungsrings kann beispielsweise ein Rand eines als Scheibe gebildeten Flanschabschnitts umgeformt, beispielsweise gebördelt, werden.

Alternativ dazu kann der Befestigungsring auch separat gefertigt und anschließend mit dem Flanschabschnitt verbunden werden. So kann der Befestigungsring beispielsweise aus einem Rohr zum Ring gebogen werden. Alternativ dazu kann der Befestigungsring aus einem umgeformten Flachmaterial oder aus einem Vierkantrohr geformt und anschließend mit dem Flanschabschnitt verbunden werden. Zur Verbindung des Befestigungsrings mit dem Flanschabschnitt wird eine Schweißverbindung bevorzugt.

Um den Felgenadapter an seinem Flanschabschnitt sicher am Felgentopf zu befestigen, kann der Flanschabschnitt eine Mehrzahl von Montagestellen aufweisen, wobei jede der Montagestellen zur Montage des Felgenadapters an einem Radbolzen der Fahrzeugfelge ausgestaltet ist.

Bevorzugt weist der Flanschabschnitt eine Mehrzahl von Öffnungen auf, die in einem an der Fahrzeugfelge montierten Zustand mit für die Radbolzen vorgesehenen Öffnungen im Felgentopf fluchtend angeordnet sind. Durch die Öffnungen im Flanschabschnitt können die Öffnungen im Felgentopf erreichbar sein.

Besonders bevorzugt sind die Öffnungen im Flanschabschnitt selbst die Montagestellen. So können Radbolzen der Fahrzeugfelge, bzw. des Fahrzeugrads in einem am Felgentopf montierten Zustand des Felgenadapters durch die Öffnungen im Flanschabschnitt ragen. Radmuttern können dann so an den Radbolzen angeschraubt werden, dass der Flanschabschnitt gegen den Felgentopf gepresst wird. Die Öffnungen im Flanschabschnitt sind dabei vorzugsweise so bemessen, dass ein Lochdurchmesser kleiner ist als der Außendurchmesser der Radmuttern. Auf eine entsprechende Weise kann der Felgenadapter an einer Fahrzeugfelge verwendet werden, bei der nicht Radbolzen und Radmuttern, sondern Radschrauben verwendet werden. Die Radschrauben können zur Montage des Felgenadapters durch die Öffnungen im Felgenadapter und in der Fahrzeugfelge hindurchgeführt werden, um gleichzeitig die Fahrzeugfelge und den Felgenadapter am Radnabenflansch des Fahrzeugs zu montieren.

Nicht jede Öffnung im Felgentopf muss zwingend zur Befestigung des Felgenadapters verwendet werden. Es kann ausreichend sein, nur eine Teilmenge der Öffnungen im Felgentopf und damit nur eine Teilmenge der Radbolzen oder Radschrauben zur Befestigung des Felgenadapters zu verwenden.

Der Felgenadapter kann in seinem Flanschabschnitt Aussparungen an den Stellen aufweisen, an denen eine Radmutter oder eine Radschraube am Felgentopf vorgesehen ist, die nicht zur Befestigung des Felgenadapters dienen soll. Die Öffnungen im Flanschabschnitt, die als Montagestellen zur Befestigung des Felgenadapters am Felgentopf dienen sollen, sind vorzugsweise entlang der Umfangsrichtung des Flanschabschnitts äquidistant angeordnet und/oder liegen sich in Bezug auf eine Flanschachse diametral gegenüber. Hierdurch kann eine gleichmäßige Kraftverteilung und damit eine sichere Befestigung des Felgenadapters am Felgentopf erreicht werden.

Werden alle Öffnungen im Felgentopf zur Montage des Felgenadapters an der Felge verwendet, bilden die Öffnungen im Felgenadapter bevorzugt einen Lochkreis, der dem Lochkreis der Felge entspricht.

Um die Radmuttern oder Radschrauben im montierten Zustand zu schützen, kann der Felgenadapter mit einem Radmutternschutz versehen sein, der die Montagestellen zumindest abschnittsweise umgibt.

Der Radmutternschutz kann die Montagestellen entlang der Umfangsrichtung der jeweiligen Öffnungen zumindest abschnittsweise umgeben, aber axial von außen für ein Werkzeug zugänglich lassen. Der Radmutternschutz kann beispielsweise durch eine Ringscheibe gebildet sein, die mit Aussparungen für die Radmuttern versehen ist. Die Ringscheibe kann parallel zum Flanschabschnitt angeordnet und von einer den Flanschabschnitt bildenden Scheibe beabstandet sein. Zum Beabstanden des Radmutternschutzes von einer den Flanschabschnitt bildenden Ringscheibe kann ein umlaufender Bund oder Abstandshalter wie Stehbolzen verwendet werden. Alternativ können auch Hülsen, die die Öffnungen umgeben, als Abstandshalter verwendet werden.

Im Folgenden ist die Erfindung beispielhaft anhand einer vorteilhaften Ausführungsform mit Bezug auf die Zeichnungen näher erläutert. Die bei der Ausführungsform beispielhaft dargestellte Merkmalskombination kann nach Maßgabe der obigen Ausführungen entsprechend den für einen bestimmten Anwendungsfall notwendigen Eigenschaften des erfindungsgemäßen Felgenadapters durch weitere Merkmale ergänzt werden. Auch können, ebenfalls nach Maßgabe der obigen Ausführungen, einzelne Merkmale bei der beschriebenen Ausführungsform weggelassen werden, wenn es auf die Wirkung dieses Merkmals in einem konkreten Anwendungsfall nicht ankommt. In den Zeichnungen werden für Elemente gleicher Funktion und/oder gleichen Aufbaus stets dieselben Bezugszeichen verwendet.

Es zeigen:
- Fig. 1 und 2: Ansichten eines Fahrzeugrads mit einer Fahrzeugfelge mit axial nach außen gewölbten Felgentopf;
- Fig. 3 und 4: Ansichten des Fahrzeugrades aus Figuren 1 und 2 mit einer bevorzugten Ausführungsform eines erfindungsgemäßen Felgenadapters in einem montierten Zustand;
- Fig. 5: eine Explosionsdarstellung des Felgenadapters aus den Figuren 3 und 4;
- Fig. 6: eine schematische Schnittdarstellung durch einen Felgenadapter an einem Felgentopf;
- Fig. 7: verschiedene schematisch dargestellte Ausführungsformen eines Felgenadapters; und
- Fig. 8 und 9: das Anhängen eines Hakens an einen Felgenadapter der Fig. 3 und 4.

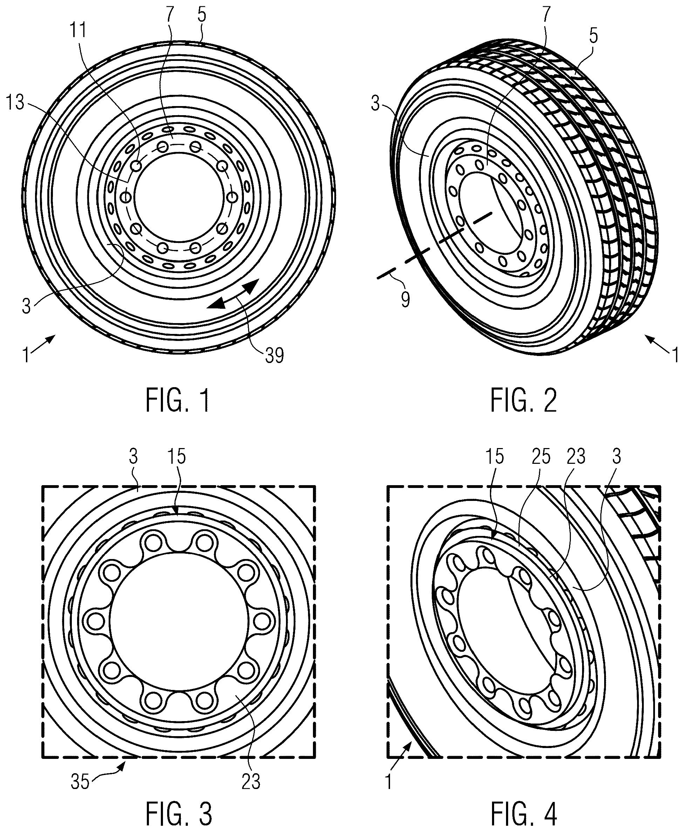

Die Figuren 1 und 2 zeigen beispielhaft ein Fahrzeugrad 1 mit einer Fahrzeugfelge 3 und einem auf der Felge 3 montierten Reifen 5. Das Fahrzeugrad 1 ist bevorzugt ein Fahrzeugrad für Nutzfahrzeuge, insbesondere für Lastkraftwagen (LKW).

Die Fahrzeugfelge 3 weist einen axial nach außen vorspringenden Felgentopf 7 auf. Mit anderen Worten wölbt sich der Felgentopf 7 entlang einer axialen Richtung 9 der Fahrzeugfelge 3 nach außen, wobei die Richtung "außen" sich auf die vom Fahrzeug weg weisende Seite der Fahrzeugfelge 3 bezieht, wenn das Fahrzeugrad 1 am Fahrzeug (nicht gezeigt) montiert ist.

Die Fahrzeugfelge 3 weist eine Mehrzahl von Öffnungen 11 am Felgentopf 7 auf. Durch die Öffnungen 11 können Radbolzen oder Radschrauben durchgeführt werden, um die Fahrzeugfelge 3 an einem Radnabenflansch eines Fahrzeugs zu befestigen.

Die Öffnungen 11 sind entlang eines Lochkreises 13 angeordnet. Der Lochkreis 13 ist in Fig. 1 gestrichelt angedeutet.

Im Folgenden ist eine erste vorteilhafte Ausführungsform eines erfindungsgemäßen Felgenadapters 15 mit Bezug auf die Figuren 3 bis 6 beschrieben.

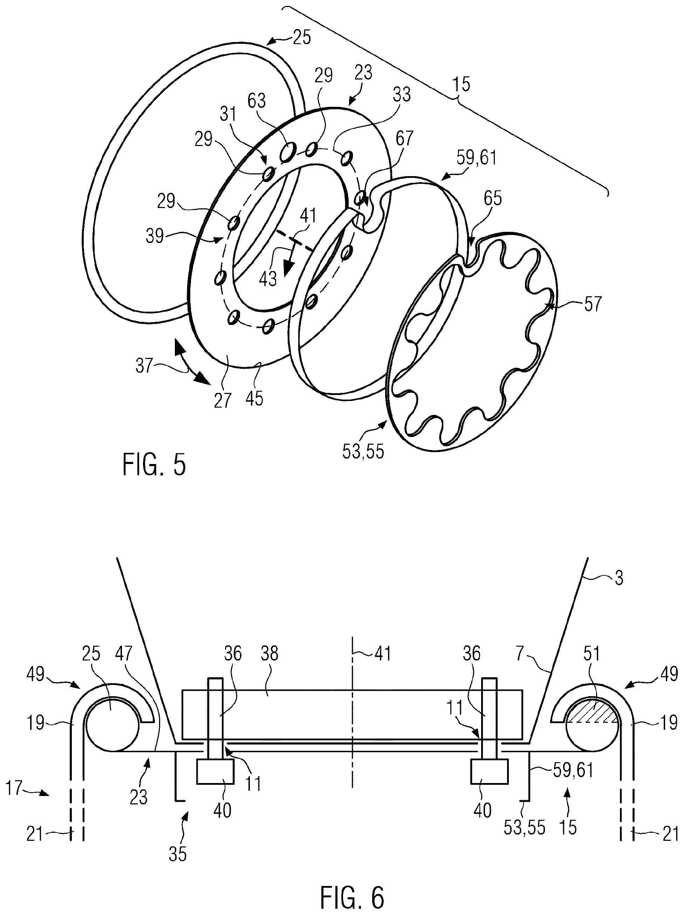

Der Felgenadapter 15 dient zur Befestigung einer selbstzentrierenden Gleitschutzkette 17 an der Fahrzeugfelge 3. Von der Gleitschutzkette 17 sind in Figur 6 lediglich Haken 19 und Spannmittel 21 angedeutet.

Der Felgenadapter 15 weist einen wiederholt am Felgentopf 7 anbringbaren Flanschabschnitt 23 und einem am Flanschabschnitt 23 angebrachten Befestigungsring 25 auf.

Der Flanschabschnitt 23 dient zur Befestigung des Felgenadapters 15 am Felgentopf 7. Der Befestigungsring 25 dient zum schnellen Einhängen wenigstens eines Hakens 19 einer Gleitschutzkette 17. Flanschabschnitt 23 und Befestigungsring 25 sind im Folgenden näher beschrieben.

Der Flanschabschnitt 23 ist bevorzugt im Wesentlichen scheibenförmig. Insbesondere kann der Flanschabschnitt 23 als eine Ringscheibe 27 gebildet sein. Der Flanschabschnitt 23 ist dabei bevorzugt aus Stahl gefertigt.

Der Flanschabschnitt ist mit einer Mehrzahl von Öffnungen 29 versehen. Diese Öffnungen 29 können als Montagestellen 31 zur Montage des Felgenadapters 15 am Felgentopf 7 genutzt werden.

Die Öffnungen 29 sind vorzugsweise entlang eines Lochkreises 33 angeordnet. In einem an der Fahrzeugfelge 3 montierten Zustand 35 des Felgenadapters 15 fluchten die Öffnungen 29 des Flanschabschnitts 23 mit den Öffnungen 11 des Felgentopf 7. In diesem Fall kann der Lochkreis 33 des Flanschabschnitts 23 dem Lochkreis 13 des Felgentopf 7 entsprechen.

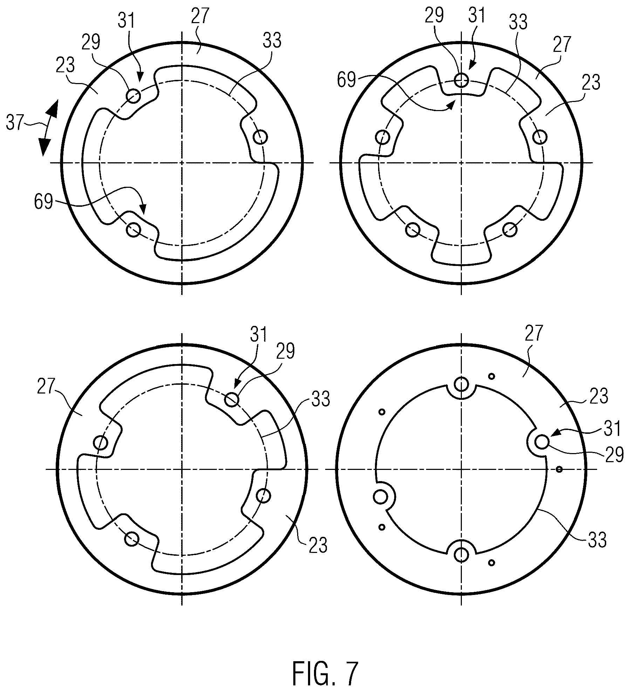

Es ist jedoch nicht notwendig, jeder Öffnung 11 des Felgentopfes 7 eine Montagestelle 31 am Flanschabschnitt 23 zuzuordnen. Es ist alternativ möglich, lediglich einer Teilmenge der Öffnungen 11 am Felgentopf 7 Montagestellen 31 des Felgenadapters 15 zuzuordnen. Auf diese Möglichkeit ist später mit Bezug auf die Figur 7 eingegangen.

Im montierten Zustand 35 können Radbolzen 36 oder Radschrauben den Felgenadapter 15 an der Fahrzeugfelge 3 halten. Hierzu ragt bevorzugt jeweils ein Radbolzen 36 sowohl durch eine Öffnung 29 als auch durch die damit fluchtende Öffnung 11 im Felgentopf 7 und ist am Nabenflansch 38 des Fahrzeugs verschraubt. Die Radmutter 40 drückt dann den Felgenadapter 15 gegen den Felgentopf 7 und den Nabenflansch 38. Im Falle einer Radschraube drückt der Schraubenkopf der Radschraube den Felgenadapter 15 und den Felgentopf 7 gegen den Nabenflansch 38.

Die Ringscheibe 27 erstreckt sich entlang einer Umfangsrichtung 37 des Felgenadapters 15. Die Umfangsrichtung 37 fällt im montierten Zustand 35 mit einer Umfangsrichtung 39 der Fahrzeugfelge 3 zusammen.

Eine Ringachse 41 der Ringscheibe 27 stellt bevorzugt die Achse des gesamten Felgenadapters 15 dar und verläuft im montierten Zustand 35 entlang der axialen Richtung 9 der Fahrzeugfelge 3, bzw. fällt mit einer entlang der axialen Richtung 9 verlaufenden Achse des Fahrzeugrads 1 zusammen.

Der Befestigungsring 25 ist in einem in radialer Richtung 43 außenliegenden Randbereich 45 des Flanschabschnitts 23 an diesem angebracht. Dabei ist der Befestigungsring 25 an einer Innenseite 47 des Flanschabschnitts 23 angebracht. Die Innenseite 47 ist die Seite, die im am Fahrzeug montierten Zustand 35 des Felgenadapters 15 zum Fahrzeug hin angeordnet ist.

Durch den Befestigungsring 25 ist eine Hinterschneidung 49 gebildet, in die wenigstens ein Haken 19 der Gleitschutzkette 17 eingehängt werden kann. Mit anderen Worten kann der wenigstens eine Haken 19 zumindest so weit um den Befestigungsring 25 herumgreifen, dass das mit dem Haken 19 verbundene Spannmittel 21 entlang der axialen Richtung 9 auf Zug gespannt werden kann.

Der Befestigungsring 25 kann aus Material des Flanschabschnitts 23 geformt sein. Beispielsweise kann die Ringscheibe 27 im Randbereich 45 umgeformt sein, um den Befestigungsring 25 zu bilden.

Alternativ dazu kann der Befestigungsring 25 separat gefertigt und mit dem Flanschabschnitt 23 verbunden sein. Bevorzugt ist der Befestigungsring 25 materialschlüssig mit dem Flanschabschnitt 23 verbunden.

Zur materialschlüssigen Verbindung kann beispielsweise eine Schweißverbindung genutzt werden.

Der Befestigungsring 25 kann aus einem zum Ring gebogenem Rohr hergestellt sein. Alternativ dazu kann der Befestigungsring 25 aus umgeformtem Flachmaterial oder aus einem zum Rundrohr umgeformten Vierkantrohr hergestellt sein.

Eine weitere alternative Ausgestaltung kann durch einen massiven Befestigungsring 25 erhalten werden. Ist der Befestigungsring 25 aus Stahl, kann das Gewicht eines massiven Befestigungsrings 25 jedoch nachteilig sein.

Der Befestigungsring 25 weist vorzugsweise einen kreisrunden Querschnitt auf. Dies ist jedoch nicht zwingend. Vorteilhaft ist es, wenn der Befestigungsring 25 zumindest in einem axial nach innen weisenden Abschnitt 51 einen zumindest abgerundeten Querschnitt aufweist, um das Einhängen des Hakens 19 und eine Bewegung des Hakens 19 entlang der Umfangsrichtung 37 zu erleichtern.

Zum Schutz der Radmuttern 41 kann der Felgenadapter 15 mit einem Radmutternschutz 53 versehen sein. Der Radmutternschutz 53 kann als Ringscheibe 55 gebildet sein, die parallel zu Ringscheibe 27 angeordnet ist und Aussparungen 57 für die Radmuttern 40 besitzt, sodass die Radmuttern 40 für ein Werkzeug zu erreichen sind.

Der Radmutternschutz 53 ist vorzugsweise von der Ringscheibe 27 beabstandet, wobei er in axialer Richtung 9 weiter von der Ringscheibe 27 beabstandet ist als die Radmuttern 40. Mit anderen Worten ragen die Radmuttern 40 entlang der axialen Richtung 9 im montierten Zustand 35 nicht über den Radmutternschutz 53 hinaus. Der Radmutternschutz 53 ist hierzu bevorzugt über wenigstens einen Abstandshalter 59 am Flanschabschnitt 23, bzw. an der Ringscheibe 27 befestigt.

Als Abstandshalter 59 kann beispielsweise ein ringförmiger Bund 61 genutzt werden, der sich entlang der Umfangsrichtung 37 durchgängig erstreckt und in radialer Richtung 43 außen um die Öffnungen 29 herum verläuft.

Durch den Bund 61 kann ein zusätzlicher Schutz für die Radmuttern 40 in radialer Richtung 43 erhalten werden. Alternative Ausgestaltungen sind hier ebenfalls möglich. Zum Beispiel muss der Bund 61 in Umfangsrichtung 37 nicht durchgängig gebildet sein. Als Alternative zum Bund 61 können auch separate Abstandshalter, beispielsweise Stehbolzen, verwendet werden.

Der Felgenadapter 15 kann so ausgestaltet sein, dass ein Reifenventil auch im montierten Zustand 35 von außen zugänglich ist. Hierzu kann der Flanschabschnitt 23 mit einer Ventilöffnung 63 versehen sein. Ist der Felgenadapter 15 mit einem Radmutternschutz 53 versehen, so können hier sowohl der Radmutternschutz 53 als auch der Abstandshalter 59 mit Aussparungen 65 bzw. 67 oder Öffnungen versehen sein.

Figur 7 zeigt weitere Ausführungsformen eines als Ringscheibe 27 gebildeten Flanschabschnitts 23 eines erfindungsgemäßen Felgenadapters 15.

Links oben in Figur 7 ist ein Flanschabschnitt 23 schematisch dargestellt, der drei als Öffnungen 29 ausgestaltete Montagestellen 31 aufweist. Die Montagestellen 31 sind auf radial nach innen vorspringenden Abschnitten 69 angeordnet, die jeweils so geformt sind, dass jeder Abschnitt 69 im montierten Zustand 35 mit einer Öffnung 11 des Lochkreises 13 der Fahrzeugfelge 3 überlappt, so dass die jeweilige Öffnung 29 mit einer Öffnung 11 im Felgentopf fluchtet. Entlang der Umfangsrichtung 37 sind die Abschnitte 69 derart bemessen, dass die übrigen Öffnungen 11 im Felgentopf 7 nicht vom Flanschabschnitt 23 abgedeckt und daher zugänglich sind.

Oben rechts und unten links sind in Figur 7 Flanschabschnitte 23 gezeigt, die mit 5 bzw. 4 Montagestellen 31 der oben beschriebenen Art versehen sind.

Rechts unten in Fig. 7 ist ein Flanschabschnitt 23 dargestellt, der 4 Montagestellen 31 mit Öffnungen 29 aufweist, welche entlang eines Lochkreises 33 angeordnet sind, der nicht dem Lochkreis 13 der Fahrzeugfelge 3 entspricht. Stattdessen sind die Montagestellen 31 zur Befestigung des Felgenadapters 15 an Stellen des Felgentopfes 7 vorgesehen, welche nicht den Öffnungen 11 für die Radbolzen 36 entsprechen. Die Felge kann beispielsweise an den Positionen, die im montierten Zustand 35 mit den Montagestellen 31 fluchten, Gewinde aufweisen, in die Schrauben zur Befestigung des Felgenadapters 15 geschraubt werden können.

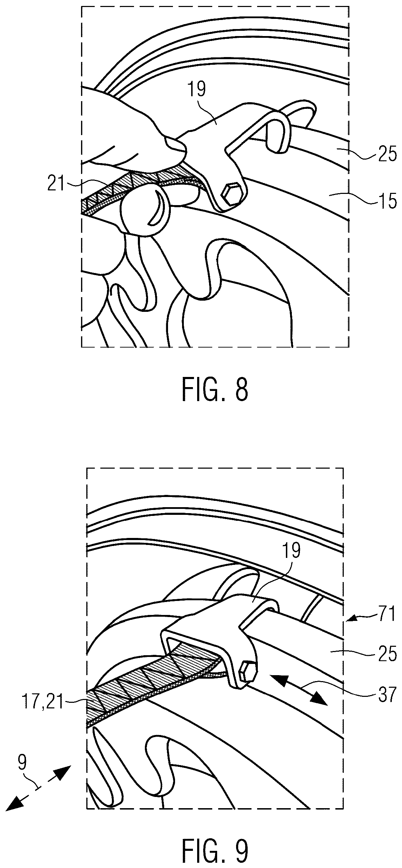

Im Folgenden ist kurz auf die Verbindung einer Gleitschutzkette 17 mit dem Felgenadapter 15 mit Bezug auf die Figuren 8 und 9 eingegangen.

Ein mit einem Haken 19 versehenes Spannmittel 21 wird zum Felgenadapter 15 geführt und der Haken 19 an den Befestigungsring 25 gehängt. Im dadurch erreichten angehängten Zustand 71 ist der Haken 19 in die Hinterschneidung 49 eingehängt und kann entlang der axialen Richtung des Fahrzeugrads 1 auf Zug gespannt werden.

Aufgrund der in Umfangsrichtung 37 durchgängig verlaufenden Hinterschneidung 49 kann der Haken 19 im Betrieb eines mit der Gleitschutzkette 17 versehenen Fahrzeugs entlang der Umfangsrichtung 37 an dem Befestigungsring 25 wandern.

Dies ist vorteilhaft um Beschädigungen der Gleitschutzkette 17, des Felgenadapters 15 und/oder des Reifens 5 zu vermeiden. Im Betrieb des Fahrzeugs können sich die Gleitschutzkette 17 und das Fahrzeugrad 1 mit unterschiedlichen Geschwindigkeiten bewegen. Zum Ausgleich der unterschiedlichen Geschwindigkeiten dient die Beweglichkeit des Hakens 19 auf dem Befestigungsring 25.

Bevorzugt ist eine Gleitschutzkette 17 mit einer Mehrzahl von Haken 19 und Spannmitteln 21 versehen.

### Bezugszeichen

- 1: Fahrzeugrad
- 3: Fahrzeugfelge
- 5: Reifen
- 7: Felgentopf
- 9: Axiale Richtung
- 11: Öffnungen
- 13: Lochkreis
- 15: Felgenadapter
- 17: Gleitschutzkette
- 19: Haken
- 21: Spannmittel
- 23: Flanschabschnitt
- 25: Befestigungsring
- 27: Ringscheibe
- 29: Öffnungen
- 31: Montagestellen
- 33: Lochkreis
- 35: Montierter Zustand
- 36: Radbolzen
- 37: Umfangsrichtung des Felgenadapters
- 38: Nabenflansch
- 39: Umfangsrichtung der Fahrzeugfelge
- 40: Radmutter
- 41: Ringachse
- 43: Radiale Richtung
- 45: Randbereich
- 47: Innenseite
- 49: Hinterschneidung
- 51: Abschnitt
- 53: Radmutternschutz
- 55: Ringscheibe
- 57: Aussparung
- 59: Abstandshalter
- 61: Bund
- 63: Ventilöffnung
- 65: Aussparung
- 67: Aussparung
- 69: Abschnitt
- 71: Eingehängter Zustand

## Patentansprüche

1. Felgenadapter (15) zur Befestigung einer selbstzentrierenden Gleitschutzkette (17) an einer Fahrzeugfelge (3) mit einem axial nach außen gewölbten Felgentopf (7), wobei der Felgenadapter (15) einen wiederholt am Felgentopf (7) anbringbar ausgestalteten Flanschabschnitt (23) und einen am Flanschabschnitt (23) angebrachten Befestigungsring (25) aufweist und wobei der Befestigungsring (25) in radialer Richtung (43) eine Hinterschneidung (49) zum Einhängen eines Hakens (19) aufweist, die in einer Umfangsrichtung (37) des Flanschabschnitts (23) durchgängig verläuft.

2. Felgenadapter (15) nach Anspruch 1, wobei der Befestigungsring (25) einen kreisrunden Querschnitt aufweist.

3. Felgenadapter (15) nach Anspruch 1 oder 2, wobei der Flanschabschnitt (23) im Wesentlichen scheibenförmig ist.

4. Felgenadapter (15) nach einem der Ansprüche 1 bis 3, wobei der Befestigungsring (25) materialschlüssig mit dem Flanschabschnitt (23) verbunden ist.

5. Felgenadapter (15) nach einem der Ansprüche 1 bis 4, wobei der Flanschabschnitt (23) eine Mehrzahl von Montagestellen (31) aufweist, wobei jede der Montagestellen (31) zur Montage des Felgenadapters (15) an einem Radbolzen (36) der Fahrzeugfelge (3) ausgestaltet ist.

6. Felgenadapter (15) nach einem der Ansprüche 1 bis 5, wobei der Flanschabschnitt (23) eine Mehrzahl von Öffnungen (29) aufweist, die in einem an der Fahrzeugfelge (3) montierten Zustand (35) mit für die Radbolzen (36) vorgesehenen Öffnungen (11) im Felgentopf (7) fluchtend angeordnet sind.

7. Felgenadapter (15) nach Anspruch 5, wobei der Flanschabschnitt (23) die Mehrzahl von Öffnungen (29) gemäß Anspruch 6 aufweist, und wobei die Öffnungen (29) die Montagestellen (31) sind.

8. Felgenadapter (15) nach einem der Ansprüche 5 bis 7, wobei der Felgenadapter (15) mit einem Radmutternschutz (53) versehen ist, der die Montagestellen (31) zumindest abschnittsweise umgibt.

9. Gleitschutzkettenset für eine Fahrzeugfelge (3), umfassend einen Felgenadapter (15) nach einem der Ansprüche 1 bis 8 und eine Gleitschutzkette (17), wobei die Gleitschutzkette (17) wenigstens ein Spannmittel (21) aufweist, dass an einem Ende mit der Gleitschutzkette (17) verbunden ist und an einem anderen Ende mit wenigstens einem zum Anhängen an den Befestigungsring (25) ausgestalteten Haken (19) versehen ist.

## Claims

1. Rim adapter (15) for fastening a self-centering anti-slip chain (17) to a vehicle rim (3) with an axially outwardly curved rim cup (7), wherein the rim adapter (15) has a flange section (23) designed to be repeatedly attached to the rim cup (7) and a fastening ring (25) attached to the flange section (23) and wherein the fastening ring (25) has an undercut (49) in the radial direction (43) for engaging a hook (19), which undercut extends continuously in a circumferential direction (37) of the flange section (23).

2. Rim adapter (15) according to claim 1, wherein the fastening ring (25) has a circular cross-section.

3. Rim adapter (15) according to claim 1 or 2, wherein the flange section (23) is essentially disc-shaped.

4. Rim adapter (15) according to one of claims 1 to 3, wherein the fastening ring (25) is connected to the flange section (23) in a material-locking manner.

5. Rim adapter (15) according to one of claims 1 to 4, wherein the flange section (23) has a plurality of mounting points (31), each of the mounting points (31) being designed for mounting the rim adapter (15) on a wheel bolt (36) of the vehicle rim (3).

6. Rim adapter (15) according to one of claims 1 to 5, wherein the flange section (23) has a plurality of openings (29) which, in a state mounted on the vehicle rim (3) (35), are arranged in alignment with openings (11) provided for the wheel bolts (36) in the rim cup (7).

7. Rim adapter (15) according to claim 5, wherein the flange section (23) has the plurality of openings (29) according to claim 6, and wherein the openings (29) are the mounting locations (31).

8. Rim adapter (15) according to one of claims 5 to 7, wherein the rim adapter (15) is provided with a wheel nut guard (53) which surrounds the mounting points (31) at least in sections.

9. Anti-skid chain set for a vehicle rim (3), comprising a rim adapter (15) according to one of claims 1 to 8 and an anti-slip chain (17), wherein the anti-slip chain (17) has at least one tensioning means (21) which is connected at one end to the anti-slip chain (17) and at another end is provided with at least one hook (19) designed to be attached to the fastening ring (25).

## Revendications

1. Adaptateur de jante (15) permettant de fixer une chaîne antidérapante à centrage automatique (17) sur une jante de véhicule (3) présentant un chapeau de jante (7) bombé axialement vers l'extérieur, dans lequel l'adaptateur de jante (15) présente une section de bride (23) conçue de manière à pouvoir être fixée de manière répétée au chapeau de jante (7) et une bague de fixation (25) fixée à la section de bride (23) et dans lequel la bague de fixation (25) présente dans la direction radiale (43) une contre-dépouille (49) permettant d'accrocher un crochet (19) qui s'étend de manière continue dans une direction périphérique (37) de la section de bride (23).

2. Adaptateur de jante (15) selon la revendication 1, dans lequel la bague de fixation (25) présente une section transversale circulaire.

3. Adaptateur de jante (15) selon la revendication 1 ou 2, dans lequel la section de bride (23) est essentiellement en forme de disque.

4. Adaptateur de jante (15) selon l'une quelconque des revendications 1 à 3, dans lequel la bague de fixation (25) est reliée par complémentarité de matière à la section de bride (23).

5. Adaptateur de jante (15) selon l'une quelconque des revendications 1 à 4, dans lequel la section de bride (23) présente une pluralité d'emplacements de montage (31), dans lequel chacun des emplacements de montage (31) est conçu pour le montage de l'adaptateur de jante (15) sur un boulon de roue (36) de la jante de véhicule (3).

6. Adaptateur de jante (15) selon l'une quelconque des revendications 1 à 5, dans lequel la section de bride (23) présente une pluralité d'orifices (29) qui, dans un état monté (35) sur la jante de véhicule (3), sont agencés de manière alignée avec des orifices (11) prévus pour les boulons de roue (36) dans le chapeau de jante (7).

7. Adaptateur de jante (15) selon la revendication 5, dans lequel la partie de bride (23) présente la pluralité d'orifices (29) selon la revendication 6, et dans lequel les orifices (29) sont les emplacements de montage (31).

8. Adaptateur de jante (15) selon l'une quelconque des revendications 5 à 7, dans lequel l'adaptateur de jante (15) est muni d'une protection d'écrou de roue (53) qui entoure au moins par sections les emplacements de montage (31).

9. Kit de chaîne antidérapante pour une jante de véhicule (3), comprenant un adaptateur de jante (15) selon l'une quelconque des revendications 1 à 8 et une chaîne antidérapante (17), dans lequel la chaîne antidérapante (17) présente au moins un moyen de serrage (21) qui est relié à une extrémité à la chaîne antidérapante (17) et qui est muni, à une autre extrémité, d'au moins un crochet (19) conçu pour être accroché à la bague de fixation (25).
